# FASCICULE DE BREVET EUROPEEN

(11) **EP 1 401 779 B1**
(45) Date de publication et mention de la délivrance du brevet: **02.03.2005**
(21) Numéro de dépôt: 02751286.2
(22) Date de dépôt: 26.06.2002
(51) Int. Cl.: C03B 32/00, C03B 29/00

(54) **PROCEDE DE TRAITEMENT THERMIQUE DE VITRES EN VERRE PRECONTRAINTES**
VERFAHREN ZUR HITZEBEHANDLUNG VON VORGESPANNTEN GLASSCHEIBEN
HEAT TREATMENT METHOD FOR PRESTRESSED GLASS PANES

(30) Priorité: 30.06.2001 DE 10131867
(43) Date de publication de la demande: 31.03.2004
(73) Titulaire: SAINT-GOBAIN GLASS FRANCE, 92400 Courbevoie (FR)
(72) Inventeur: KASPER, Andreas, NL-6291 CK Vaals (NL); HAUSER, Hubert, 52146 Wurselen (DE); RUBBERT, Franck, 52223 Stolberg (DE)
(74) Mandataire: Colombier, Christian
(86) Numéro de dépôt international: PCT/FR2002/002209
(87) Numéro de publication internationale: WO 2003/008350

(56) Documents cités:
- EP-A- 0 897 113
- EP-A- 1 018 490
- US-A- 3 776 707

## Description

L'invention se rapporte à un procédé de traitement thermique de vitres en verre précontraintes (c'est-à-dire trempées, et en anglais « tempered ») en vue de l'élimination des vitres en verre ayant une tendance à la fracture spontanée, ayant les caractéristiques du préambule de la revendication 1.

Des procédés de ce genre sont ainsi connus sous le terme de test d'entreposage à chaud (intitulés également en anglais "Heat-Soak-Test"). Grâce à leur utilisation, les vitres en verre précontraintes de ce genre, qui présentent, en raison d'inclusions cristallines, à savoir de grains de sulfure de nickel (NiS), un risque de fracture soudaine imprévisible après leur montage, devraient déjà être détruites avant l'achat et le montage. Pour éviter un coût démesurément élevé lors du contrôle de la matière première, de la masse fondue de verre et des plaques, l'on procède sur les plaques en verre dont il est question (avant tout celles qui sont prévues pour les vitrages de façades) à la simulation, à l'aide d'un test d'entreposage à chaud, pendant une période prolongée, de leur emploi dans les conditions d'utilisation. Le test accélère, comme le fait une projection en accéléré, le processus de transformation et de croissance des inclusions de NiS, qui se déroule d'une manière très lente dans des conditions normales (sur des années).

En résumé, le verre flotté peut contenir des inclusions cristallines de NiS, dont la forme (hexagonale) α est stable au-delà de 380°C. En dessous de cette température limite commence une transformation allotropique dans la forme (rhomboédrique) β. Cette dernière laisse apparaître, par une augmentation du volume des grains au cours d'une période plus ou moins longue, qui dépend des températures agissant sur. le verre et de la composition fine des inclusions, des contraintes internes dans la masse en verre, qui peuvent conduire finalement, même après des années, à une autodestruction spontanée des vitres en verre concernées. L'on calcule, à partir des données cristallographiques, une augmentation de volume maximale de 4,0 %.

Les tests d'entreposage à chaud classiques constituent, en raison de leur durée élevée et de la continuité insuffisante du flux de matériau, du point de vue commercial, une entrave perturbant la production. Les plaques susceptibles d'une destruction spontanée du genre cité ne survivent la plupart du temps pas au test, alors que les plaques non détruites sont considérées comme étant utilisables sans réserves quelconques. Il se produit malgré tout encore toujours des destructions spontanées au lieu d'utilisation, même dans le cas de vitres qui ont été soumises auparavant à un test d'entreposage à chaud. L'on recherche, par conséquent, des moyens d'augmenter la fiabilité des résultats, la durée du traitement thermique devant être maintenue aussi courte que possible.

C'est ainsi que le document US-A-6,067,820 décrit un procédé, qui doit rendre possible un flux continu des vitres en verre à la suite de la procédure de précontrainte, et cela également pendant le test d'entreposage à chaud. L'on y parvient, après le processus de précontrainte usuel, par l'échauffement, à nouveau, des vitres en verre d'environ 300°C à une température d'environ 340-370°C, respectivement par l'interruption passagère de leur refroidissement, une fois atteint ce domaine de température, immédiatement après la précontrainte. Par le maintien de ta température pendant un intervalle de temps relativement court d'une à plusieurs minutes dans ce domaine, une conversion complète des inclusions de NiS de la phase α en la phase β doit être assurée, conversion lors de laquelle les inclusions de NiS subissent une croissance volumique de 2,38 % et qui provoque la destruction spontanée des vitres susceptibles. La durée d'action relativement courte de la température élevée doit exclure des conséquences négatives sur la précontrainte des vitres en verre. Les vitres en verre mises à l'essai intactes sont ensuite ramenées à la température appropriée à un maniement ultérieur par soufflage à l'aide d'air de refroidissement (convection forcée).

Le document DE-B2-20 43 942 décrit un autre procédé, lors duquel les vitres en verre doivent être maintenues, avant ou après la précontrainte, pendant une période de temps prédéterminée, dans un domaine de température compris entre 100 et 380°C, la température pouvant varier au cours du temps au sein des valeurs-limites citées conformément aux lois exponentielles connues de la cinétique de conversion de premier ordre. Grâce au maintien de températures plus élevées, la période de temps requise devient, par conséquent, plus courte. L'on parvient ainsi tout d'abord à la conversion des inclusions de α-NiS de la phase à la phase β, une majorité des vitres (d'essai) menacées étant déjà brisées à ce stade. L'on adjoint de préférence une procédure de chauffage superficielle courte, les vitres en verre encore intactes étant soumises, à nouveau, pendant une durée brève (comprise entre 10 et 300 secondes) à une température élevée (entre 300 et 950°C). Ce test de sollicitation doit complètement détruire les vitres en verre "susceptibles", dans lesquelles, à la suite de la croissance cristalline, des microfractures se sont déjà formées. Ce test est limité strictement dans le temps, pour que le choc thermique n'ait aucune conséquence négative sur la précontrainte des vitres en verre. Aucun échantillon ayant des inclusions de NiS n'a surmonté cet essai dans les expériences de comparaison effectuées dans le document DE-B2-20 43 942. Le document EP-A1-1 000 906 se rapporte également au test Heat-Soak. L'on y considère la température de 282°C comme optimale pour la formation aussi rapide que possible de la phase β des inclusions NiS dans toutes les compositions responsables des fractures spontanées. Cette valeur est également désignée comme étant la limite supérieure de la stabilité de la phase β citée. Le procédé classique qui y est décrit chauffe les vitres en verre précontraintes à contrôler à partir de la température ambiante, relativement lentement à la température citée, maintient celle-ci pendant une période de temps déterminée d'au moins 3 heures et refroidit alors à nouveau les vitres en verre.

L'augmentation maximale volumique des cristaux de NiS par unité de temps se situe, de l'avis général, à des températures allant de 280 à 300°C, qui, dans le cas des tests Heat-Soak effectués jusqu'ici, ont été atteintes d'une manière relativement lente et ont été. maintenues, afin de parvenir à une croissance aussi rapide que possible des cristaux de NiS. A partir d'études plus détaillées, l'on a reconnu que les cristaux de α-NiS présents dans les vitres en verre à précontrainte thermique, après leur refroidissement en dessous de la température limite d'environ 380° C, forment de préférence des germes de la phase β dans un domaine de température déterminé. Ces germes constituent la condition préalable de la conversion plus ou moins complète de ces cristaux en phase β et, par conséquent, de leur croissance volumique très souvent destructrice. Les publications suscitées ne se consacrent pas à la formation de germes.

Dans le domaine de formation de germes préféré susmentionné, qui a été localisé, grâce à des essais d'envergure, comme se situant nettement en dessous des températures de test usuelles d'environ 300°C, l'on trouve un maximum marqué de la formation de germes par unité de temps. Les germes de la phase β se forment naturellement également à des températures hors du domaine cité, mais à une vitesse bien plus lente et d'une manière moins complète - avec les risques à long terme connus. Des vitres en verre précontraintes, qui sont refroidies avant l'exécution du test Heat-Soak à la température ambiante et qui sont alors à nouveau chauffées, traversent certes forcément, une fois vers le bas et une fois vers le haut, la température de la formation maximale de germes par unité de temps. L'on ne peut cependant pas obtenir, lors de l'exécution de tests d'entreposage à chaud, conformément à l'état de la technique, immédiatement après un traitement de précontrainte thermique des vitres en verre sans refroidissement dans le domaine de température de la formation de germes, aucun résultat suffisamment fiable lors de l'élimination de vitres en verre susceptibles de subir des dégâts, parce que la probabilité d'une formation de germes est faible, respectivement, parce que seulement une proportion relativement faible des inclusions de α-NiS est capable de former des germes.

Il est généralement connu (Lexique, "Römpp Chemie", Volume 3, 10ème édition 1997) que les germes sont des particules de substance qui rendent possible le déclenchement de la formation de nouvelles phases d'une substance. En tant qu'exemple, l'on indique des micro-cristallites, qui rendent possible la mise en train de la cristallisation au sein d'une solution ou d'une masse fondue. Une inférence concrète relative à la conversion de cristaux de α-NiS en leur phase β n'en ressort pas.

L'objet de l'invention est d'indiquer un procédé supplémentaire de la nature suscitée en vue du traitement thermique de vitres en verre précontraintes dans l'optique de l'élimination d'exemplaires ayant une tendance à la fracture spontanée.

Le procédé possédant les caractéristiques de la revendication 1 apporte une solution à l'objet posé selon l'invention, en suivant les nouvelles connaissances relatives à la formation de germes β dans les inclusions de NiS. Les caractéristiques des revendications secondaires fournissent des perfectionnements avantageux de ce procédé.

Les résultats de recherche suggèrent qu'une excitation rapide et ciblée, même l'imposition de la formation de germes citée, respectivement l'approche du domaine de température dans lequel celle-ci se déroule de préférence (domaine de formation de germes) peut améliorer nettement les résultats d'un test Heat-Soak subséquent et raccourcir substantiellement avant tout l'intervalle de temps requis.

Ce domaine de formation de germes préféré se situe entre 80 et 200°C, le maximum de la formation de germes par unité de temps, conformément aux connaissances établies jusqu'ici, se situe approximativement entre 130 et 160°C. Sa position précise dépend cependant d'un grand nombre de conditions limites (mélange et épaisseur du verre, proportions et pureté du NiS) et ne peut pas être déterminée en général de manière assurée.

Une fois que la formation de germes β (par conséquent pas encore la conversion complète) a été accomplie de toutes façons tout d'abord dans chacun des micro-cristaux de NiS de la phase α, inclus dans la masse en verre, le test d'entreposage à chaud subséquent déclenchera, indépendamment de sa configuration, avec une sûreté élevée, la croissance maximale de chaque inclusion, c'est-à-dire que toutes les inctusions de α-NiS se convertiront complètement en inclusions de β-NiS. Si leur croissance reste non critique pour la vitre en verre à précontrainte thermique concernée, celle-ci ne sera alors plus détruite au cours de l'utilisation ultérieure.

Le test Heat-Soak proprement dit, destiné à la croissance accélérée des inclusions de β-NiS, respectivement à l'achèvement de la conversion de phases, est, par conséquent, effectué après une formation de germes complète.

Un avantage significatif supplémentaire du procédé selon l'invention réside en ce qu'il est possible de régler de manière ciblée et rapide justement ce domaine essentiel de formation de germes et de le maintenir, pendant un intervalle de temps défini, que ce soit à température constante, que ce soit avec une croissance très lente ou également avec une baisse au sein du domaine, que ce soit avec une commande variable / une oscillation de température au sein du domaine. Il y a, à chaque fois, augmentation de l'assurance non seulement que tous les cristaux de NiS capables de former des germes sont effectivement affectés par la formation de germes et subissent également plus tard une croissance dans leur phase β, mais aussi que le potentiel d'autodestruction présent est pris en compte dans une mesure la plus grande possible.

L'on peut, certes, faire suivre la formation de germes, comme déjà indiqué, par pratiquement n'importe quel test d'entreposage à chaud classique. Il est cependant entendu que l'on parvient à la rentabilité la plus élevée possible et à la durée d'essai la plus courte possible si les vitres en verre sont chauffées à nouveau à la suite de la formation de germes dans le domaine de température connu, dans lequel les cristaux de NiS croissent le plus rapidement, respectivement subissent une conversion complète. La littérature discutée au début fournit à ce sujet des informations suffisantes.

Le procédé selon l'invention apporte maintenant également ici des avantages considérables, en ce qu'après le déroulement de la phase de formation de germes, l'on peut cibler également la température d'essai préférée d'une manière relativement rapide, par conséquent à l'aide de forts gradients de température, là où, jusqu'ici, la croissance en température globale, en raison de l'existence de valeurs d'expérience plutôt empiriques, n'était imposée que d'une manière relativement lente.

A la suite de modifications de température très raides et, de surcroît, de durées de maintien encore relativement courtes aux valeurs optimales, la durée du processus général est raccourcie d'une manière telle que l'on peut réaliser un déroulement tout au moins quasi continu.

Lors de cette procédure, il n'importe effectivement également pas dans quelle direction et avec quelle vitesse (en degrés K/minute) le domaine de température optimal pour la formation de germes est atteint. Par conséquent, les vitres en verre peuvent être échauffées à partir de la température ambiante à cette température ou à ce domaine le plus rapidement possible, pour commencer le procédé ou l'on maintient le refroidissement des vitres en verre, qui viennent d'un four de précontrainte dans ce domaine de température - si possible naturellement dans le voisinage du maximum de la formation de germes par unité de temps. Celui-ci est maintenu pendant un intervalle de temps prédéterminé, qui est de préférence d'au moins cinq minutes. Ces valeurs oscillent naturellement également en fonction de la quantité de verre, qui doit être soumise au test, ainsi que de l'épaisseur des vitres, etc.

Pour ce qui est des fours destinés à l'exécution du test d'entreposage à chaud ou Heat-Soak modifié, aucune modification de principe du côté équipement n'est nécessaire. Les domaines de température préférés et leur déroulement dans le temps peuvent en principe être réglés à l'aide de chaque commande classique de four et de température. L'on augmentera de manière appropriée toutefois la puissance de chauffage, respectivement l'on améliorera le transfert thermique en direction du verre (en particulier par convection forcée), pour être en mesure d'imposer des gradients de température plus raides que ceux utilisés jusqu'ici. Cette dernière modification est cruciale finalement dans l'optique d'un raccourcissement notable de la durée de temps globale ainsi que de la garantie d'un test fiable.

L'on s'attend à ce que le test d'entreposage à chaud soit à effectuer pour des vitres, qui doivent être chauffées à partir de la température ambiante, en tout sur une période d'environ 5 heures, et pour des vitres, qui sont acheminés en ligne à l'état encore chaud en provenance du traitement de précontrainte de manière directe au test d'entreposage à chaud, en tout sur une période d'environ 0,5 heures.

Dans le sens d'un exemple de réalisation, l'on décrit dans la suite brièvement un déroulement orienté vers la pratique du procédé, suivant directement (en ligne) le traitement de précontrainte thermique de vitres en verre.

Les vitres en verre quittent une station de précontrainte en ayant une température d'environ 450°C, à laquelle elles ont été refroidies de préférence par trempe à l'aide d'air frais. Elles sont alors acheminées individuellement ou en paquets à une station de traitement thermique (four), dans laquelle leur température est contrainte de s'abaisser à une température de moins de 200°C, par exemple, dans un domaine préféré (de formation de germes) compris entre 130 et 160°C, par l'intermédiaire d'un gradient de -4 degrés K/minute (ou plus rapidement, si possible). La modification rapide de température est imposée de préférence par une convection (forcée). La température du verre est alors maintenue pendant un intervalle de temps d'au moins cinq minutes dans ce domaine, les vitres en verre se trouvant de préférence dans une chambre fermée. Celles-ci peuvent en l'occurrence également être en mouvement en position couchée sur une bande transporteuse. Un flux de matériau continu peut ainsi être maintenu. La durée de cet intervalle de temps peut être, le cas échéant, encore optimalisée sur la base des résultats de test.

Grâce à cette durée de résidence de la température dans le domaine de la formation de germes, il est assuré, conformément aux constations faites jusqu'ici, qu'il se forme, dans toute les inclusions de NiS de phase α, tout au moins des germes de phase β. Certaines inclusions peuvent également déjà maintenant être converties plus ou moins complètement en phase β, quelques vitres en verre pouvant déjà être détruites. Il faut prendre des mesures appropriées naturellement pour l'élimination des tessons de verre.

La température de vitres en verre est ensuite orientée à l'aide d'un gradient de 4 degrés K/minute (ou plus rapidement si l'on dispose d'une puissance de four suffisante et/ou si le transfert thermique vers le verre est bon) vers le domaine connu d'environ 290°C ± 10°C, afin de convertir les inclusions de α-NiS, porteuses de germes, le plus rapidement et de manière aussi complète que possible en leur phase β. Ce domaine de température est maintenu pour une durée d'au moins 15 minutes. Les vitres en verre susceptibles de fracture spontanée sont détruites pendant cet intervalle de temps, si elles n'ont pas déjà été détruites précédemment. Un raccourcissement même des 15 minutes citées est concevable, si la fiabilité de l'autodestruction est assurée par voie statistique également dans le cadre d'une durée d'action plus courte de la température plus élevée.

Les vitres en verre peuvent en principe rester en mouvement également pendant ce deuxième intervalle de temps tout comme pendant l'augmentation de température, dans la mesure où le maintien de la température souhaitée est en l'occurrence garantie.

Après déroulement du temps de maintien à la température de test proprement dite, les vitres en verre encore intactes sont refroidies à la température ambiante. Un refroidissement par convection à l'aide de milieux froids (air, fluide) peut également apporter ici des économies de temps considérables.

## Revendications

1. Procédé de traitement thermique de vitres en verre précontraintes en vue de l'élimination d'exemplaires spécimens menacés de fracture spontanée (essai Heat-Soak) par la croissance volumique de cristaux inclus, en particulier par la transformation d'inclusions de sulfure de nickel de leur phase α en leur phase β, les vitres en verre étant maintenues après la précontrainte pendant une période de temps déterminée à au moins une valeur de température accélérant la croissance volumique des cristaux, **caractérisé en ce que** la température des vitres en verre est amenée
a) dans le domaine dit de la formation de germes correspondant à une formation de germes de la phase β dans les inclusions de α-NiS présentes, laquelle température se situe en dessous de 250°C et au-dessus de la température ambiante, la modification de température lors de l'approche du domaine de formation de germes étant de plus de 2 degrés K/minute et une modification de température substantiellement plus lente étant engendrée pendant une période de temps déterminée d'au moins 5 minutes au sein du domaine de formation de germes ou une température déterminée constante y étant maintenue, puis
b) dans le cadre d'un traitement thermique supplémentaire, dans un domaine de température au-dessus du domaine de formation de germes, à au moins une valeur de température accélérant la croissance volumique des cristaux, pendant une période de temps déterminée afin de convertir en leur phase β les inclusions de α-NiS porteuses de germes de la phase β.

2. Procédé selon la revendication précédente, **caractérisé en ce que** la température des vitres en verre est amenée, au sein du domaine de formation de germes, à une valeur comprise dans une plage située entre 80 et 200°C.

3. Procédé selon l'une quelconque des revendications précédentes, **caractérisé en ce que** la température des vitres en verre est amenée, au sein du domaine de formation de germes, à une valeur comprise entre 100 et 180°C.

4. Procédé selon l'une quelconque des revendications précédentes, **caractérisé en ce que** la température des vitres en verre est amenée, au sein du domaine de formation de germes, à une valeur comprise entre 130 et 160°C.

5. Procédé selon l'une quelconque des revendications précédentes, **caractérisé en ce que** la température des vitres en verre est amenée, par chauffage à partir d'une température de départ plus basse, en particulier à partir de la température ambiante, à la valeur correspondant au domaine de formation de germes.

6. Procédé selon l'une quelconque des revendications 1 à 4, **caractérisé en ce que** la température des vitres en verre à la suite de leur précontrainte thermique est amenée, à partir d'une température de départ plus élevée, grâce à un refroidissement contrôlé, au domaine de température correspondant à la formation de germes.

7. Procédé selon l'une quelconque des revendications précédentes, **caractérisé en ce que** les vitres en verre sont soumises, lors du traitement thermique supplémentaire, à la zone de la vitesse de croissance maximale des cristaux ou des phases cristallines qui se forment.

8. Procédé selon la revendication précédente, **caractérisé en ce que** la température des vitres en verre est amenée également au domaine correspondant à la température du traitement thermique supplémentaire à l'aide d'une modification de plus de 2 degrés K/minute.

9. Procédé selon la revendication 7 ou 8, **caractérisé en ce que** la température des vitres en verre est amenée, pour une période de temps d'au moins 15 minutes, au domaine correspondant à la température de la vitesse de croissance maximale des cristaux ou des phases cristallines qui se forment.

10. Procédé selon la revendication 7 ou 8 ou 9, **caractérisé en ce que** la température des vitres en verre est amenée, pour le traitement thermique supplémentaire, à des valeurs comprises entre 280 et 300°C.

11. Procédé selon la revendication 1, **caractérisé en ce que** la température des vitres en verre est amenée, au sein du domaine de formation de germes, à une valeur comprise dans une plage située entre 80 et 200°C pendant une durée d'au moins 5 minutes, puis
à l'aide d'une modification de plus de 2 degrés K/minute, au domaine correspondant à la température du traitement thermique supplémentaire dans la zone de la vitesse de croissance maximale des cristaux ou des phases cristallines qui se forment, pour une période de temps d'au moins 15 minutes.

## Claims

1. Method for the heat treatment of prestressed glass panes with a view to the elimination of specimen examples threatened with spontaneous fracture (the Heat-Soak test) through the volume growth of included crystals, in particular through the transformation of inclusions of nickel sulphide from their α phase to their β phase, the glass panes being maintained after prestressing for a given period of time at at least a temperature value accelerating the volume growth of crystals, **characterised in that** the temperature of the glass panes is brought
a) into the so-called seed formation domain corresponding to a formation of seeds in the β phase in the α-NiS inclusions present, the said temperature being situated below 250°C and above room temperature, the temperature change when approaching the seed formation domain being more than 2 degrees K/minute and a substantially slower temperature change being generated during a given period of time of at least 5 minutes within the seed formation domain or a constant given temperature being maintained therein, and then
b) in the context of an additional heat treatment, in a temperature domain above the seed formation domain, at at least a temperature value accelerating the volume growth of the crystals, for a given period of time, in order to convert into their β phase the α-NiS inclusions carrying seeds in the β phase.

2. Method according to the preceding claim, **characterised in that** the temperature of the glass panes is brought, within the seed formation domain, to a value lying within a range situated between 80° and 200°C.

3. Method according to any one of the preceding claims, **characterised in that** the temperature of the glass panes is brought, within the seed formation domain, to a value of between 100° and 180°C.

4. Method according to any one of the preceding claims, **characterised in that** the temperature of the glass panes is brought, within the seed formation domain, to a value of between 130° and 160°C.

5. Method according to any one of the preceding claims, **characterised in that** the temperature of the glass panes is brought, by heating from a lower starting temperature, in particular from room temperature, to the value corresponding to the seed formation domain.

6. Method according to any one of Claims 1 to 4, **characterised in that** the temperature of the glass panes following their thermal prestressing is brought, from a higher starting temperature, by virtue of a controlled cooling, to the temperature domain corresponding to the formation of seeds.

7. Method according to any one of the preceding claims, **characterised in that** the glass panes are subjected, during the additional heat treatment, to the zone of the maximum growth rate of the crystals or crystalline phases which form.

8. Method according to the preceding claim, **characterised in that** the temperature of the glass panes is also brought to the domain corresponding to the temperature of the additional heat treatment by means of a change of more than 2 degrees K/minute.

9. Method according to Claim 7 or 8, **characterised in that** the temperature of the glass panes is brought, for a period of time of at least 15 minutes, to the domain corresponding to the temperature of the maximum growth rate of the crystals or crystalline phases which form.

10. Method according to Claim 7 or 8 or 9, **characterised in that** the temperature of the glass panes is brought, for the additional heat treatment, to values of between 280° and 300°C.

11. Method according to Claim 1, **characterised in that** the temperature of the glass panes is brought, within the seed formation domain, to a value lying in a range situated between 80° and 200°C for a period of at least 5 minutes, and then
by means of a change of more than 2 degrees K/minute, to the domain corresponding to the temperature of the additional heat treatment in the zone of the maximum growth rate of the crystals or crystalline phases which form, for a period of time of at least 15 minutes.

## Patentansprüche

1. Verfahren zur Wärmebehandlung vorgespannter Glasscheiben zum Zwecke des Ausscheidens von Exemplaren, die durch Volumenzuwachs eingeschlossener Kristalle, insbesondere durch Umwandlung von Nickelsulfid-Einschlüssen aus ihrer α-Phase in ihre β-Phase, von Spontanbruch gefährdet sind (Heat-Soak-Test), wobei die Glasscheiben nach dem Vorspannen für eine bestimmte Zeitspanne mindestens auf einem den Volumenzuwachs der Kristalle beschleunigenden Temperaturwert gehalten werden, **dadurch gekennzeichnet, dass** die Temperatur der Glasscheiben:
a) in einen sogenannten Keimbildungsbereich gebracht wird, der einer Bildung von Keimen der β-Phase in den vorhandenen α-NiS Einschlüssen entspricht, welche Temperatur unterhalb 250°C und oberhalb der Umgebungstemperatur liegt, wobei die Temperaturänderung beim Einsteuem des Keimbildungsbereichs mehr als 2 K/Min beträgt und im Keimbildungsbereich während eines festgelegten Zeitraums von mindestens 5 Minuten eine wesentlich langsamere Temperaturveränderung erzeugt wird oder eine festgelegte konstante Temperatur gehalten wird, dann
b) im Rahmen einer weiteren Wärmebehandlung während eines festgelegten Zeitraums auf einen Temperaturbereich oberhalb des Keimbildungsbereichs, mindestens auf einem den Volumenzuwachs der Kristalle beschleunigenden Temperaturwert, gebracht wird, um die α-NiS-Einschlüsse von Keimträgem der β-Phase in ihre β-Phase umzuwandeln.

2. Verfahren nach vorstehendem Anspruch, **dadurch gekennzeichnet, dass** die Temperatur der Glasscheiben innerhalb des Keimbildungsbereichs auf einen Wert im Bereich zwischen 80 und 200°C eingestellt wird.

3. Verfahren nach einem der vorstehenden Ansprüche, **dadurch gekennzeichnet, dass** die Temperatur der Glasscheiben innerhalb des Keimbildungsbereichs auf einen Wert zwischen 100 und 180°C eingestellt wird.

4. Verfahren nach einem der vorstehenden Ansprüche, **dadurch gekennzeichnet, dass** die Temperatur der Glasscheiben innerhalb des Keimbildungsbereichs auf einen Wert zwischen 130 und 160°C eingestellt wird.

5. Verfahren nach einem der vorstehenden Ansprüche, **dadurch gekennzeichnet, dass** die Temperatur der Glasscheiben durch Erwärmung von einer niedrigeren Ausgangstemperatur, insbesondere von der Umgebungstemperatur, auf den dem Keimbildungsbereich entsprechenden Wert gesteuert wird.

6. Verfahren nach einem der Ansprüche 1 bis 4, **dadurch gekennzeichnet, dass** die Temperatur der Glasscheiben im Anschluss an ihre thermische Vorspannung ausgehend von einer höheren Ausgangstemperatur durch gesteuertes Abkühlen in den Temperaturbereich der Keimbildung gesteuert wird.

7. Verfahren nach einem der vorstehenden Ansprüche, **dadurch gekennzeichnet, dass** die Glasscheiben während der weiteren Wärmebehandlung dem Temperaturbereich der maximalen Wachstumsgeschwindigkeit sich bildender Kristalle oder Kristallphasen unterzogen werden.

8. Verfahren nach dem vorstehenden Anspruch, **dadurch gekennzeichnet, dass** die Temperatur der Glasscheiben auch in den der weiteren Wärmebehandlung entsprechenden Temperaturbereich mit einer Änderung von mehr als 2 K/Min gesteuert wird.

9. Verfahren nach Anspruch 7 oder 8, **dadurch gekennzeichnet, dass** die Temperatur der Glasscheiben für eine Zeitspanne von mindestens 15 Minuten in den der maximalen Wachstumsgeschwindigkeit der sich bildenden Kristalle oder Kristallphasen entsprechenden Temperaturbereich gesteuert wird.

10. Verfahren nach Anspruch 7 oder 8 oder 9, **dadurch gekennzeichnet, dass** die Temperatur der Glasscheiben für die weitere Wärmebehandlung auf Werte zwischen 280 und 300°C gesteuert wird.

11. Verfahren nach Anspruch 1, **dadurch gekennzeichnet, dass** die Temperatur der Glasscheiben im Bereich der Keimbildung für eine Dauer von mindestens 5 Minuten auf einen Wert zwischen 80 und 200°C, dann
durch eine Veränderung von mehr als 2 K/Minute für einen Zeitraum von mindestens 15 Minuten in den der Temperatur der weiteren Wärmebehandlung entsprechenden Bereich der maximalen Wachstumsgeschwindigkeit der sich bildenden Kristalle oder Kristallphasen gesteuert wird.
